(19) Europäisches Patentamt
European Patent Office
Office européen des brevets

(11) EP 2 671 104 B1

(12) **EUROPEAN PATENT SPECIFICATION**

(45) Date of publication and mention of the grant of the patent:
**10.04.2019 Bulletin 2019/15**

(21) Application number: **11703994.1**

(22) Date of filing: **03.02.2011**

(51) Int Cl.:
***G02B 1/10*** *(2015.01)*
***C09D 4/00*** *(2006.01)*
***C08L 81/02*** *(2006.01)*
*C08K 3/22* *(2006.01)*
***B29D 11/00*** *(2006.01)*
***C08G 75/045*** *(2016.01)*
***C09D 7/61*** *(2018.01)*

(86) International application number:
**PCT/US2011/023550**

(87) International publication number:
**WO 2012/105974 (09.08.2012 Gazette 2012/32)**

(54) **SELF-HEALING TRANSPARENT COATINGS CONTAINING MINERAL CONDUCTIVE COLLOIDS**

SELBSTHEILENDE TRANSPARENTE BESCHICHTUNGEN MIT LEITFÄHIGE MINERALKOLLOIDEN

REVÊTEMENTS TRANSPARENTS D'AUTORÉPARATION CONTENANT DES COLLOÏDES MINÉRAUX CONDUCTEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.12.2013 Bulletin 2013/50**

(73) Proprietor: **Essilor International**
**94220 Charenton-le-Pont (FR)**

(72) Inventor: **ZHENG, Haipeng**
**Dallas, TX 75234 (US)**

(74) Representative: **Cabinet Plasseraud**
**66, rue de la Chaussée d'Antin**
**75440 Paris Cedex 09 (FR)**

(56) References cited:
**WO-A1-2010/075508**
**WO-A2-2006/055409**
**US-B1- 6 551 710**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 671 104 B1

## Description

The present invention is drawn to optical articles with self-healing transparent coatings containing mineral conductive colloids, to a method for manufacturing such optical articles, and also to a method for repairing scratches in the self-healing coating of such an article.

The development of optical elements, including ophthalmic lenses, manufactured from plastic materials has also required the development of protective coatings providing good abrasion resistance and/or scratch resistance.

In the optical field there is still considerable endeavor and research for improving the known hard-coatings to make them ever more abrasion and scratch resistant.

A rather new and very interesting route for solving the problem of scratches and/or abrasion of organic glasses is to protect the lenses with coating layers able to repair themselves, i.e. coatings which would be able, when submitted to a simple physical treatment, to revert completely or partially to the initial non-scratched condition. The use of such self-healing coatings as clear top coats in the automotive industry has been described for example in US 2009/06453 and WO 2009/029641.

Cornerstone Research Group Inc. has marketed two transparent shape memory polymers, Veriflex® (a polystyrene base resin) and Veriflex® E (a two-part epoxy-based resin), showing interesting self-healing performances. Preliminary experimental tests carried out by the inventors have however shown that these coatings suffer either from excessive initial haze and/or from very poor scratch resistance.

The present invention is based on the discovery that a class of known thermocured or photocured resins obtained by thiol-ene reactions and used heretofore as UV-curable adhesives, display interesting transparency and a shape memory effect with transition temperature in the range of 45 to 65 °C. These resins are the Norland Optical Adhesives (NOA) marketed by Norland Products Inc.. When tested as protective coatings on ophthalmic lenses, these resins showed healing levels similar to the Veriflex® coatings in the Manual Brass Brush test (described hereafter), but turned out to display lower healing levels for some deeper scratches (up to 3 $\mu$m depth) generated by the Automated Steel Wool test (described hereafter).

The Applicants therefore have tried to improve the healing performance of said thiol-ene resins by incorporating colloidal particles into the monomer mixture before curing.

A large number of colloids have been tested, most of which turned out to be "non-compatible" with the liquid monomer mixture, in other words it has not been possible to prepare a homogenous, clear and stable suspension of the particles in the monomer mixture.

The Applicants, after having selected a few colloids compatible with the monomer mixture, have further observed that non-conductive colloids, such as silica, desirably improved the healing performances of the final cured resin coatings. This effect was however undesirably counteracted by lower scratch resistance, eventually leading to a much higher haze value.

It was only when incorporating conductive colloids such as $Sb_2O5$ or $SnO_2$ into the known thiol-ene resins that the Applicants obtained cured coatings having both of significantly increased healing levels and lower final haze values.

In its first aspect, the present invention is therefore drawn to an optical article comprising

(a) a transparent optical substrate, and

(b) a transparent coating, said transparent coating being the outermost coating of the optical article and consisting essentially of

- a polythiol-ene matrix obtained by curing a liquid monomer mixture comprising at least one polyfunctional thiol and at least one polyfunctional allyl monomer, said cured polythiol-ene matrix having a glass transition temperature comprised in the range of from 40 °C to 70 °C, preferably in the range of from 45 °C to 65 °C, and
- from 0.5 to 7 % by weight of conductive mineral colloids homogeneously dispersed therein.

The polyfunctional thiol is a tetrathiol of formula

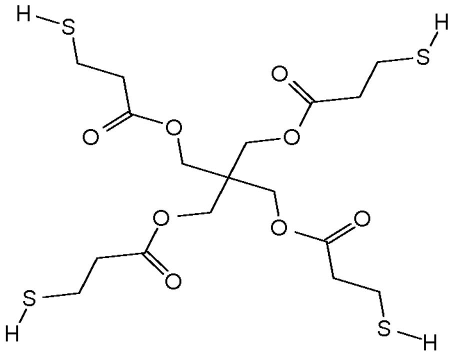

the polyfunctional allyl monomer is triallyl isocyanurate and the conductive mineral colloids are selected from the group consisting of $Sb_2O_5$, $SnO_2$, ATO ($SnO_2/Sb_2O_5$), PTO ($SnO_2/P_2O_5$).

The optical substrate may be any organic glass commonly known and used in the optical field. It may be a thermoplastic resin such as thermoplastic polycarbonate, or a thermoset or photo-cured resin such as CR 39®, polyurethane or polythiourethane. Its selection is not critical to the present invention.

The transparent self-healing coating is not necessarily in contact with the underlying optical substrate and there may be one or more intermediate layers, such as a primer layer, a polarizing layer, anti-reflection layers, etc. Each of these intermediate layers should be also transparent.

The final cured coating of the optical article is a composite of

- a polymer matrix based on a thiol-ene resin, and
- conductive mineral colloids homogeneously dispersed in said polymer matrix.

The cured coating is thus essentially free of any other component which is not part of the polymer matrix or the colloids, such as solvents, non-colloidal mineral fillers, fibres, organic fillers, etc.

This however does not mean that the polythiol-ene matrix is the only polymer component of the self-healing coating of the present invention. There may be a minor amount of another oligomer or polymer component, said component being either covalently bound to the polythiol-ene matrix or homogeneously incorporated therein. This additional oligomer or polymer component must be sufficiently compatible with both of the liquid monomer mixture and the cured resin to prevent any phase separation during or after the curing procedure which would inevitably lead to excessive haze of the final coating. The amount of the additional oligomer or polymer component in the polymer matrix preferably is not higher than about 30 % by weight, preferably not higher than 20 % by weight, and most preferably not higher than 10 % by weight.

None of the optical coatings disclosed in WO 2010/075508 and WO2006/055409 consist essentially of conductive mineral colloids homogeneously dispersed therein and selected from the group consisting of $Sb_2O_5$, $SnO_2$, ATO ($SnO_2/Sb_2O_5$), PTO ($SnO_2/P_2O_5$).

In the present invention the polyfunctional thiol in the liquid monomer mixture is a tetrathiol of formula (1)

(1) 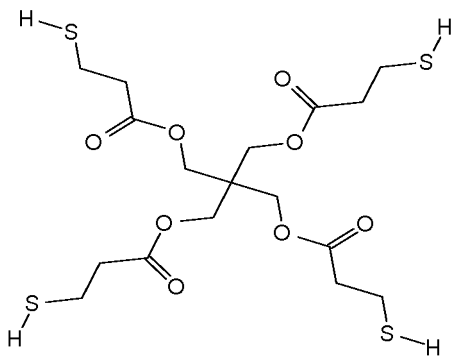

.

This tetrathiol is reacted with triallyl isocyanurate as the polyfunctional allyl monomer. The weight ratio of the polyfunctional thiol to the polyfunctional allyl monomer is preferably comprised in the range of from 55/45 to 57/43.

As explained above, the polyfunctional thiol and the polyfunctional allyl monomer are the major components of the liquid monomer mixture. They preferably comprise at least 70 % by weight, more preferably at least 80 % by

weight, and even more preferably at least 90 % by weight of the liquid monomer mixture. In a particularly preferred embodiment, the liquid monomer mixture essentially consists of polyfunctional thiols, polyfunctional allyl monomers, and/or of a suitable amount of photo-initiators or catalysts.

Liquid UV curable monomer mixtures comprising or consisting essentially of a polyfunctional thiol and a polyfunctional allyl monomer as defined hereabove are marketed under the reference NOA 61, NOA 63, NOA 65 and NOA 68 by Norland Products Inc. NOA 61 and NOA 63 lead to very low haze values of finally healed coatings and therefore are the most preferred curable monomer mixtures. NOA 61 essentially consists of 55 - 57 weight % of tetrathiol of formula (1) and 43 - 45 weight % of triallyl isocyanurate. NOA 63 contains about 70 - 75 weight % of NOA 61 and about 25 - 30 weight % of a urethane component.

The conductive colloids used in the present invention have an average particle size comprised in the range of 5 to 25 nm. They are selected from the group consisting of $Sb_2O_5$, $SnO_2$, ATO ($SnO_2/Sb_2O_5$), PTO ($SnO_2/P_2O_5$).

As will be apparent from the examples, the Applicants have observed that colloidal nanoparticles $Sb_2O_5$ and $SnO_2$, when added in a sufficient but not too high amount, significantly increase the self-healing performance of polythiol-ene matrices as defined above and also are satisfactory both with regard to the initial haze of the coating and with regard to the haze after a self-healing step. These conductive metallic oxides therefore are particularly preferred in the present invention.

The mineral conductive colloids are present in the final cured coating in an amount from 0.5 to 7 % by weight, preferably from 1 to 6 % by weight. At lower concentrations, the self-healing performance of the final coating is not significantly increased. When the concentration of the conductive colloid is too high, i.e. above 7 %, the scratch resistance, the haze value after healing, and the healing performance of the final coating are surprisingly reduced with respect to lower concentrations.

There is no particular limitation as to the thickness of the self-healing coating of the present invention. The coating should be sufficiently thick to efficiently protect the underlying substrate and optional functional layers. Excessive coating thickness could however be detrimental to transparency of the final optical article.

The self-healing coatings consequently have a thickness similar to known abrasion resistant coatings which is typically comprised in the range of 2 μm to 50 μm, preferably of 5 μm to 20 μm.

The optical article preferably is a lens, such as an ophthalmic lens, sunglass lens or other optical lens, and most preferably is an ophthalmic lens. A mentioned above, it may contain functional layers such as polarizing layers, anti-reflective coatings, visible light and UV absorbing coatings, anti-choc coatings, photochromic coatings, all of which are familiar to the skilled person.

The present invention is also drawn to a method for manufacturing an optical article having a self-healing component according to the present invention. Such a manufacturing method comprises:

- homogeneously dispersing a conductive mineral colloid, in an amount comprised in the range of 0.5 to 7 % by weight relative to the total dry weight of the dispersion, in a liquid monomer mixture comprising at least one polyfunctional thiol and at least one polyfunctional allyl monomer,
- coating the resulting dispersion onto a transparent optical substrate, and
- curing the resulting layer by submitting the coated substrate to UV light and/or heat,

the polyfunctional thiol is a tetrathiol of formula

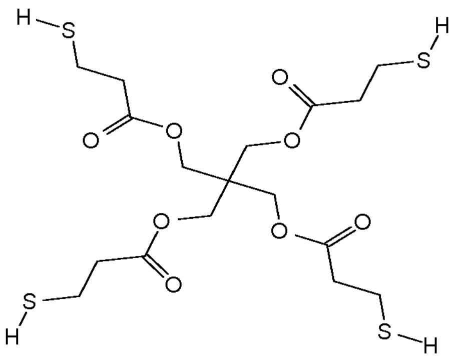

the polyfunctional allyl monomer is triallyl isocyanurate and the conductive mineral colloids are selected from the group consisting of $Sb_2O_5$, $SnO_2$, ATO ($SnO_2/Sb_2O_5$), PTO ($SnO_2/P_2O_5$).

The conductive mineral colloid may first be dispersed in an organic solvent, such as a lower alkanol or a glycol alkyl ether, for example Dowanol PM (propyleneglycol methyl ether).

A wetting agent (surfactant) may also be added to the coating composition, preferably in an amount not exceeding about 0.2 % by weight of the total coating composition. A preferred wetting agent is EFKA®-3034, a fluorocarbon-modified polysiloxane sold by Ciba Specialty Chemicals.

The liquid monomer mixture with the conductive colloid dispersed therein is then coated onto the optical substrate, or a functional layer overlaying the optical substrate. The dispersion may be coated by any suitable coating method such as dip-coating, bar coating, spray coating, or spin coating. Spin coating is most preferred.

The coated substrate may be submitted to a drying step at room temperature or at elevated temperature for example at a temperature ranging from 30 to 120 °C, in order to evaporate the solvent used for dispersing the conductive colloid.

The optionally dried coating is then submitted to UV irradiation, preferably with a UV radiation dosage ranging from 0.150 J/cm$^2$ to 1.20 J/cm$^2$ in the UV-C range (290nm - 100nm).

The present invention is also drawn to a method for suppressing scratches on an optical article according to the present invention. Said method comprises heating the optical article with the cured and scratched self-healing coating to a temperature at least equal to the glass transition temperature of the polythiol-ene matrix. The coating may be heated by conduction or convection. The heating medium may be a gas, for example warm or hot air. In a preferred embodiment, the heating is carried out by contacting the outermost scratched coating of the optical article with a warm or hot liquid, preferably warm or hot water. The heating is preferably maintained for a duration comprised in the range of 1 to 60 minutes, preferably of 10 to 30 minutes.

The self-healing performance, or "healing level", of the coatings is assessed using two different scratch/abrasion tests, generating scratches with different depths.

Manual Brass Brush test (MBB test): Initial haze ($Haze_0$) of a coated lens is measured using a Haze Guard XL-211 plus meter using the standard method ASTM D 1003-00. The convex side of the lens is first rubbed with a brass brush (Weiler 44189, Block size L x W: 7.5 inches x 0.5 inch, Bristle rows: 3 x 7, Trim length: 0.5 inche) for ten forward strokes. The haze of the scratched lens ($Haze_s$) is then measured under the same conditions as the initial haze. The scratches made by this method are analyzed by profilometer and confirmed to be in the range from 0 to 1 $\mu$m in depth, most scratches being less than 0.6 $\mu$m in depth, except some larger scratches having a depth higher than 1 $\mu$m on Veriflex® coatings.

Automated Steel Wool test (ASW test): Initial haze ($Haze_0$) of a coated lens is measured using a Haze Guard XL-211 plus meter using the standard method ASTM D 1003-00. The convex side of the lens is first rubbed with steel wool (000 grade) for 5 cycles (1 cycle = 1 forward and 1 backward motion) under 1200 g of load using the automated steel wool machine. The haze of the scratched lens ($Haze_s$) is then measured under the same conditions as the initial haze. The scratches made by this method are analyzed by profilometer and confirmed to be in the range of from 0 to 3 $\mu$m in depth, except some larger scratches having a depth higher than 3 $\mu$m on Veriflex® coatings.

The lenses submitted to the MBB test or ASW test are subsequently immersed in warm water at 60 °C for 15 minutes and are taken out from the water to cool down at room temperature. The haze ($Haze_h$) of a lens after this healing process is measured with a Haze Guard XL-211 plus meter using the standard method ASTM D 1003-00.

The healing level is then calculated as follows:

$$\text{Healing level (\%)} = \frac{Haze_s - Haze_h}{Haze_s} \times 100$$

**Example 1**

Healing level of Norland Optical Adhesives (NOA) in comparison with commercial Veriflex® coatings

The following coating solutions A, B, C and D were prepared by adding a solvent propylene glycol methyl ether (Dowanol® PM from Dow) or tetrahydrofuran (THF from Aldrich) into NOA 61, 63, 65, and 68, respectively, shown in Table 1.

Table 1

| Solution | NOA | | Solvent | |
|---|---|---|---|---|
| | Type | Weight (g) | Type | Weight (g) |
| A | NOA 61 | 30.0 | Dowanol PM | 20.0 |
| B | NOA 63 | 20.0 | Dowanol PM | 30.0 |

(continued)

| Solution | NOA | | Solvent | |
|---|---|---|---|---|
| | Type | Weight (g) | Type | Weight (g) |
| C | NOA 65 | 5.6 | THF | 10.4 |
| D | NOA 68 | 4.8 | THF | 11.2 |

The coatings were prepared by spin coating on piano CR39® lenses (Orma lenses) at a speed of 400 - 600 rpm for 10 seconds and then 800 - 1000 rpm for 5 seconds to get a coating thickness of about 5 μm. The coatings were then cured by passing them twice in a Fusion Systems® UV belt conveyor at a speed of 6 feet/min (1.83 m/min).

The below Table 2 shows the results of some basic coating performance tests carried out on the resulting coatings A, B, C, and D.

Table 2

| Coating | Thickness (μm) | Refractive Index at 632nm | $Haze_0$ (%) | T (%) | Bayer abrasion test | Yellow index |
|---|---|---|---|---|---|---|
| **A** | 5.1 | 1.564 | 0.15 | 91.3 | **0.64** | 1.6 |
| **B** | 5.0 | 1.549 | 0.13 | 91.4 | **0.45** | 1.4 |
| **C** | 5.0 | 1.525 | 0.17 | 91.7 | 0.35 | 1.5 |
| **D** | 5.1 | 1.541 | 0.15 | 91.5 | 0.33 | 1.5 |

All these coatings show excellent initial transparency with a $Haze_0$ value of only about 0.13 to 0.17 whereas the $Haze_0$ value of Veriflex® coatings is much higher, about 1.2 %. As seen in Table 2, the Bayer abrasion test results of the coatings A (NOA 61) and B (NOA 63) were better than the coatings C (NOA 65) and D (NOA 68). So the coatings resulting from these two liquid monomer mixtures were submitted to the ASW test and the MBB test.

Table 3

| Coating on CR39® | $Haze_0$ (%) | $Haze_s$ after **MBB** test (%) | $Haze_h$ (%) | Healing level (%) |
|---|---|---|---|---|
| A | 0.15 | 3.22 | 0.42 | 87 |
| B | 0.19 | 2.59 | 0.37 | 86 |
| Veriflex® | 1.17 | 28.20 | 2.66 | 91 |
| Coating on CR39® | $Haze_0$ (%) | $Haze_s$ after **ASW** test (%) | $Haze_h$ (%) | Healing level (%) |
| A | 0.17 | 2.69 | 1.71 | 36 |
| B | 0.12 | 3.35 | 2.12 | 37 |
| Veriflex® | 1.21 | 46.7 | 6.32 | 87 |

The coatings A and B prepared respectively from NOA 61 and NOA 63 proved to have a much higher scratch resistance than the Veriflex® coatings. The healing performances of the coatings A and B were satisfactory for superficial scratches such as those generated by the MBB test. When submitted to the ASW test, some deeper scratches could however not be repaired by immersing the coating into warm water for 15 minutes and the final haze values were about 2 % which is not quite satisfactory for optical applications. We will show hereafter how the incorporation of conductive mineral colloids leads to a significant improvement of the healing performances of the A and B resins, resulting in final haze values lower than 1 %.

**Example 2**

Incorporation of non-conductive mineral colloids

Four liquid monomer mixtures A1 to A4 were prepared by adding a dispersion of colloidal silica (Osca 1122-A8, 15 - 25 wt % dispersion from JGC), Dowanol® PM, and a wetting agent (EFKA-3034 from Ciba Specialty Chemicals)

into the solution A of Table 1.

Table 4

| Solution | Solution A (g) | Osca (g) | Dowanol PM (g) | EFKA-3034 (g) |
|---|---|---|---|---|
| **A1** | 95.0 | 1.5 | 3.0 | 0.1 |
| **A2** | 89.0 | 5.5 | 6.0 | 0.1 |
| **A3** | 90.0 | 8.5 | 7.0 | 0.1 |
| **A4** | 86.5 | 10.5 | 8.0 | 0.1 |

The coatings were prepared and cured in the way described in Example 1.

Table 5 shows the results of some basic coating performance tests carried out on the resulting coatings A1 to A4.

Table 5

| Coating | Thickness (μm) | Mineral colloid content (wt%) | Refractive Index at 632nm | $Haze_0$ (%) | T (%) | Bayer abrasion test | Yellow index |
|---|---|---|---|---|---|---|---|
| **A1** | 5.3 | 0.52 | 1.562 | 0.33 | 91.2 | 0.56 | 1.8 |
| **A2** | 5.2 | 1.92 | 1.558 | 0.80 | 90.7 | 0.74 | 2.0 |
| **A3** | 5.2 | 2.90 | 1.555 | 0.87 | 90.6 | 0.74 | 2.1 |
| **A4** | 5.4 | 3.70 | 1.553 | 0.68 | 90.5 | 0.76 | 2.2 |

All coatings have acceptable initial haze values ($Haze_0$) below 1 %.

Coating A from Example 1 and Coatings A1 to A4 containing from 0.52 to 3.7 wt% of colloidal silica were then submitted to the above-described ASW test. After measuring the haze of the scratched coating, the optical article was immersed for 15 minutes in warm water at a temperature of 60 °C. The results are shown in Table 6.

Table 6

| Coating | $Haze_0$ (%) | $Haze_s$ (%) | $Haze_h$ (%) | Healing level (%) |
|---|---|---|---|---|
| **A** | 0.17 | 2.69 | 1.71 | 36 |
| **A1** | 0.29 | 3.83 | 1.51 | 61 |
| **A2** | 0.69 | 5.41 | 2.33 | 57 |
| **A3** | 0.84 | 4.04 | 2.26 | 44 |
| **A4** | 0.48 | 4.03 | 2.07 | 49 |

It appears that all but one silica-containing coating show higher final haze values and all silica-containing coatings show lower scratch resistance than the coating A, in spite of the increased healing performances (healing levels of 44 - 61 % in comparison with 36 % of the control).

These results demonstrate that the incorporation of non-conductive colloids in NOA 61 monomer mixtures, desirably improves the healing performances of the final cured resin coatings, but this effect is undesirably counteracted by lower scratch resistance, eventually leading to similar or even higher values of the final haze.

**Example 3**

Incorporation of conductive mineral colloids

The following eight liquid monomer mixtures were prepared by adding a dispersion of colloidal $Sb_2O_5$ nano-particles (ELCOM NE 1002 SBV, 19 wt% dispersion from JGC) or $SnO_2$ (ELCOM NE 1003 PTV, 15 - 25 wt% dispersion from JGC), Dowanol® PM and a wetting agent (EFKA-3034 from Ciba Specialty Chemicals) into the liquid monomer solutions A or B, respectively (Table 1).

Table 7

| Coating | Solution | | Conductive colloid dispersion | | Dowanol PM (g) | EFKA - 3034 (g) |
|---|---|---|---|---|---|---|
| | Type | Weight (g) | Type | Weight (g) | | |
| **A5** | A | 93.0 | $Sb_2O_5$ | 3.0 | 4.0 | 0.1 |
| **A6** | A | 88.0 | $Sb_2O_5$ | 11.0 | 1.0 | 0.1 |
| **A7** | A | 84.0 | $Sb_2O_5$ | 16.0 | 0 | 0.1 |
| **A8** | A | 80.0 | $Sb_2O_5$ | 20.0 | 0 | 0.1 |
| **A9** | A | 90.0 | $SnO_2$ | 3.0 | 7.0 | 0.1 |
| **A10** | A | 90.0 | $SnO_2$ | 7.0 | 3.0 | 0.1 |
| **B1** | B | 94.0 | $Sb_2O_5$ | 2.0 | 4.0 | 0.1 |
| **B2** | B | 90.0 | $Sb_2O_5$ | 7.5 | 2.5 | 0.1 |

The coatings were prepared and cured in the way described in Example 1.

Table 8 shows the results of some basic coating performance tests carried out on the resulting coatings A5-A10 and B1-B2.

Table 8

| Coating | Thickness (μm) | Mineral colloid content (wt%) | Refractive Index at 632nm | $Haze_0$ (%) | T (%) | Bayer abrasion | Yellow index |
|---|---|---|---|---|---|---|---|
| **A5** | 4.9 | 1.0 | 1.565 | 0.15 | 91.0 | 0.59 | 1.5 |
| **A6** | 5.0 | 3.8 | 1.568 | 0.18 | 90.8 | 0.63 | 1.5 |
| **A7** | 5.0 | 5.7 | 1.569 | 0.16 | 90.7 | 0.67 | 1.5 |
| **A8** | 5.0 | 7.3 | 1.571 | 0.21 | 90.5 | 0.67 | 1.5 |
| **A9** | 5.0 | 1.0 | 1.564 | 0.18 | 90.7 | 0.60 | 1.7 |
| **A10** | 4.9 | 2.4 | 1.566 | 0.19 | 90.6 | 0.62 | 1.8 |
| **B1** | 4.9 | 1.0 | 1.553 | 0.21 | 91.1 | 0.58 | 1.2 |
| **B2** | 4.7 | 3.8 | 1.555 | 0.21 | 91.0 | 0.65 | 1.2 |

All coatings have acceptable initial haze values ($Haze_0$) below 1 %.

The coatings of Table 8 were then submitted to the above-described ASW test. The results in comparison with the unfilled resins A and B are shown in Table 9.

Table 9

| Coating | $Haze_0$ (%) | $Haze_s$ (%) | $Haze_h$ (%) | Healing level (%) |
|---|---|---|---|---|
| **A** | 0.17 | 2.69 | 1.71 | 36 |
| **A5*** | 0.13 | **2.80** | **0.81** | **71** |
| **A6*** | 0.16 | **2.82** | **0.61** | **78** |
| **A7*** | 0.23 | **2.65** | **0.54** | **80** |
| **A8** | 0.17 | 4.13 | 1.99 | 52 |
| **A9*** | 0.20 | **2.75** | **0.98** | **64** |
| **A10*** | 0.22 | **2.58** | **0.69** | **73** |
| | | | | |

(continued)

| Coating | $Haze_0$ (%) | $Haze_s$ (%) | $Haze_h$ (%) | Healing level (%) |
|---|---|---|---|---|
| **B** | 0.12 | 3.35 | 2.12 | 37 |
| **B1*** | 0.18 | **3.39** | **1.95** | **42** |
| **B2*** | 0.14 | **3.27** | **1.76** | **46** |
| * according to the invention | | | | |

These results demonstrate the excellent self healing performances of the NOA 61 resin coatings containing conductive $Sb_2O_5$ or $SnO_2$ colloids:

- all final haze values ($Haze_H$) are less than 1.0 %;
- the healing level is significantly improved with respect to the comparative coating A,
- comparative coating A8 shows that the amount of colloids added to the resin should not exceed a maximum value of about 7 % by weight.

The incorporation of the conductive colloids does *not* lower the coating scratch resistance, compared with the colloid-free coatings A and B, respectively.

## Claims

1. Optical article comprising

    (a) a transparent optical substrate and
    (b) a transparent coating, said transparent coating being the outermost coating of the optical article and consisting essentially of

    - a polythiol-ene matrix obtained by curing a liquid monomer mixture comprising at least one polyfunctional thiol and at least one polyfunctional allyl monomer, said cured polythiol-ene matrix having a glass transition temperature comprised in the range of from 40 °C to 70 °C, and
    - from 0.5 to 7 % by weight of conductive mineral colloids homogeneously dispersed therein,

    wherein the polyfunctional thiol is a tetrathiol of formula

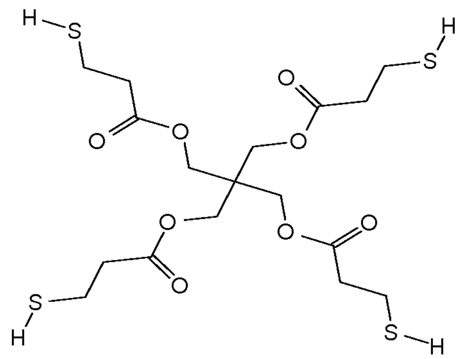

    the polyfunctional allyl monomer is triallyl isocyanurate and the conductive mineral colloids are selected from the group consisting of $Sb_2O_5$, $SnO_2$, ATO ($SnO_2/Sb_2O_5$), PTO ($SnO_2/P_2O_5$).

2. The optical article according to claim 1, wherein the polyfunctional thiol and polyfunctional allyl monomers comprise at least 70 % by weight, preferably at least 80 % by weight, and more preferably at least 90 % by weight of the liquid monomer mixture.

3. The optical article according to claim 1 or 2, wherein the weight ratio of the polyfunctional thiol to the polyfunctional

allyl monomer is comprised in the range of 55/45 to 57/43.

4. The optical article according to any of claims 1 to 3, wherein the glass transition temperature of the matrix is comprised in the range of from 45 °C to 65 °C.

5. The optical article according to any of claims 1 to 4, wherein the transparent coating comprises from 1 to 6 % by weight of conductive mineral colloids homogeneously dispersed therein.

6. The optical article according to any of claims 1 to 5, wherein the final cured transparent coating has a thickness comprised in the range of 2 μm to 50 μm, preferably between 5 μm and 20 μm.

7. The optical article according to any of claims 1 to 6, said article being a lens, preferably an ophthalmic lens.

8. A method for suppressing scratches on an optical article according to any of claims 1 to 7, said method comprising heating said article to a temperature at least equal to the glass transition temperature of the polythiol-ene matrix.

9. The method according to claim 8, wherein the heating is carried out by contacting the outermost scratched coating with a warm or hot liquid, preferably warm or hot water, having a temperature at least equal to the glass transition temperature of the polythiol-ene matrix.

10. The method according to claim 8 or 9, wherein the heating is maintained for a duration comprised in the range of 1 to 60 minutes, preferably of 10 to 30 minutes.

11. A method for preparing an optical article according to any of claims 1 to 7, comprising

- homogeneously dispersing the conductive mineral colloid, in an amount comprised in the range of 0.5 to 7 % by weight relative to the total dry weight of the dispersion, in a liquid monomer mixture comprising the at least one polyfunctional thiol and the at least one polyfunctional allyl monomer,
- coating the resulting dispersion onto a transparent optical substrate, and
- curing the resulting layer by submitting the coated substrate to UV light and/or heat.

**Patentansprüche**

1. Optischer Artikel, umfassend

(a) ein transparentes optisches Substrat und
(b) eine transparente Beschichtung, wobei die zweite Beschichtung die äußerste Beschichtung des optischen Artikels ist und im Wesentlichen aus

- einer durch Härten einer flüssigen Monomermischung, die mindestens ein polyfunktionelles Thiol und mindestens ein polyfunktionelles Allylmonomer umfasst, erhaltenen Polythiol-En-Matrix, wobei die gehärtete Polythiol-En-Matrix eine Glasübergangstemperatur im Bereich von 40 °C bis 70 °C aufweist, und
- 0,5 bis 7 Gew.-% darin homogen dispergierten leitfähigen mineralischen Kolloiden besteht,

wobei es sich bei dem polyfunktionellen Thiol um ein Tetrathiol der Formel

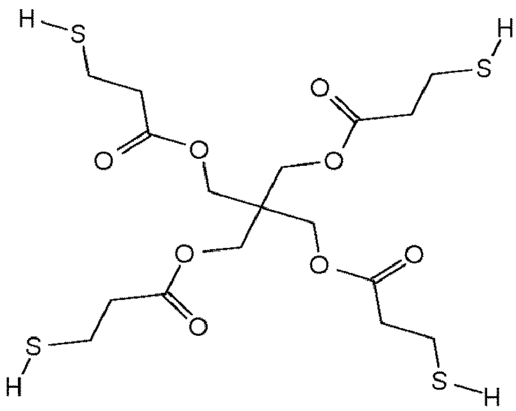

handelt, es sich bei dem polyfunktionellen Allylmonomer um Triallylisocyanurat handelt und die leitfähigen mineralischen Kolloide aus der Gruppe bestehend aus $Sb_2O_5$, $SnO_2$, ATO ($SnO_2/Sb_2O_5$), PTO ($SnO_2/P_2O_5$) ausgewählt sind.

**2.** Optischer Artikel nach Anspruch 1, wobei das polyfunktionelles Thiol und die polyfunktionellen Allylmonomere mindestens 70 Gew.-%, vorzugsweise mindestens 80 Gew.-% und weiter bevorzugt mindestens 90 Gew.-% der flüssigen Monomermischung ausmachen.

**3.** Optischer Artikel nach Anspruch 1 oder 2, wobei das Gewichtsverhältnis von polyfunktionellem Thiol zu polyfunktionellem Allylmonomer im Bereich von 55/45 bis 57/43 liegt.

**4.** Optischer Artikel nach einem der Ansprüche 1 bis 3, wobei die Glasübergangstemperatur der Matrix im Bereich von 45 °C bis 65 °C liegt.

**5.** Optischer Artikel nach einem der Ansprüche 1 bis 4, wobei die transparente Beschichtung 1 bis 6 Gew.-% darin homogen dispergierte leitfähige mineralische Kolloide umfasst.

**6.** Optischer Artikel nach einem der Ansprüche 1 bis 5, wobei die fertige transparente Beschichtung eine Dicke im Bereich von 2 µm bis 50 pm, vorzugsweise zwischen 5 µm und 20 pm, aufweist.

**7.** Optischer Artikel nach einem der Ansprüche 1 bis 6, wobei sich bei dem Artikel um eine Linse, vorzugsweise eine ophthalmische Linse, handelt.

**8.** Verfahren zum Unterdrücken von Kratzern auf einem optischen Artikel nach einem der Ansprüche 1 bis 7, bei dem man den Artikel auf eine Temperatur erhitzt, die mindestens gleich der Glasübergangstemperatur der Polythiol-En-Matrix ist.

**9.** Verfahren nach Anspruch 8, bei dem das Erhitzen durch Inberührungbringen der äußersten zerkratzten Beschichtung mit einer warmen oder heißen Flüssigkeit, vorzugsweise warmem oder heißem Wasser, mit einer Temperatur, die mindestens gleich der Glasübergangstemperatur der Polythiol-En-Matrix ist, durchgeführt wird.

**10.** Verfahren nach Anspruch 8 oder 9, bei dem das Erhitzen für eine Dauer im Bereich von 1 bis 60 Minuten, vorzugsweise von 10 bis 30 Minuten, aufrecht erhalten wird.

**11.** Verfahren zur Herstellung eines optischen Artikels nach einem der Ansprüche 1 bis 7, das Folgendes umfasst:

- homogenes Dispergieren des leitfähigen mineralischen Kolloids in einer Menge im Bereich von 0,5 bis 7 Gew.-%, bezogen auf das gesamte Trockengewicht der Dispersion, in einer flüssigen Monomermischung, das mindestens eine polyfunktionelle Thiol und das mindestens eine polyfunktionelle Allylmonomer umfasst,
- Beschichten eines transparenten optischen Substrats mit der resultierenden Mischung und
- Härten der resultierenden Schicht durch Einwirkung von UV-Licht und/oder Wärme auf das beschichtete Substrat.

## Revendications

**1.** Article optique comprenant

(a) un substrat optique transparent et

(b) un revêtement transparent, ledit revêtement transparent étant le revêtement extérieur de l'article optique et consistant essentiellement en

- une matrice de polythiol-ène obtenue par durcissement d'un mélange liquide de monomères comprenant au moins un thiol polyfonctionnel et au moins un monomère allylique polyfonctionnel, ladite matrice de polythiol-ène durcie ayant une température de transition vitreuse comprise dans la gamme de 40 °C à 70 °C, et
- de 0,5 à 7 % en poids de colloïdes minéraux conducteurs dispersés de façon homogène à l'intérieur,

dans lequel le thiol polyfonctionnel est un tétrathiol de formule

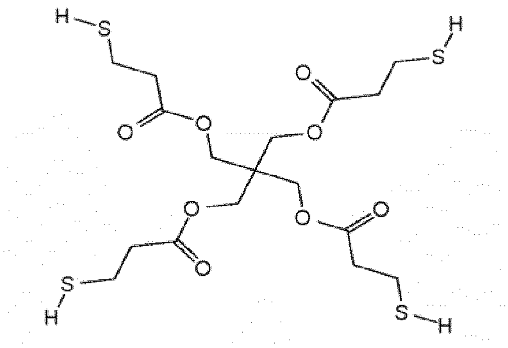

,

le monomère allylique polyfonctionnel est l'isocyanurate de triallyle et les colloïdes minéraux conducteurs sont choisis dans le groupe constitué par $Sb_2O_5$, $SnO_2$, ATO ($SnO_2/Sb_2O_5$), PTO ($SnO_2/P_2O_5$).

**2.** Article optique selon la revendication 1, dans lequel le thiol polyfonctionnel et les monomères allyliques polyfonctionnels constituent au moins 70 % en poids, de préférence au moins 80 % en poids, et mieux encore au moins 90 % en poids du mélange liquide de monomères.

**3.** Article optique selon la revendication 1 ou 2, dans lequel le rapport pondéral entre le thiol polyfonctionnel et le monomère allylique polyfonctionnel est compris dans la gamme de 55/45 à 57/43.

**4.** Article optique selon l'une quelconque des revendications 1 à 3, dans lequel la température de transition vitreuse de la matrice est comprise dans la gamme de 45 °C à 65 °C.

**5.** Article optique selon l'une quelconque des revendications 1 à 4, dans lequel le revêtement transparent comprend de 1 à 6 % en poids de colloïdes minéraux conducteurs dispersés de façon homogène à l'intérieur.

**6.** Article optique selon l'une quelconque des revendications 1 à 5, dans lequel le revêtement transparent durci final a une épaisseur comprise dans la gamme de 2 μm à 50 μm, de préférence entre 5 μm et 20 μm.

**7.** Article optique selon l'une quelconque des revendications 1 à 6, ledit article étant un verre, de préférence un verre ophtalmique.

**8.** Procédé de suppression de rayures sur un article optique selon l'une quelconque des revendications 1 à 7, ledit procédé comprenant le chauffage dudit article jusqu'à une température au moins égale à la température de transition vitreuse de la matrice de polythiol-ène.

**9.** Procédé selon la revendication 8, dans lequel le chauffage est réalisé par mise en contact du revêtement extérieur rayé avec un liquide tiède ou chaud, de préférence de l'eau tiède ou chaude, ayant une température au moins égale à la température de transition vitreuse de la matrice de polythiol-ène.

**10.** Procédé selon la revendication 8 ou 9, dans lequel le chauffage est maintenu pendant une durée comprise dans la gamme de 1 à 60 minutes, de préférence de 10 à 30 minutes.

**11.** Procédé de préparation d'un article optique selon l'une quelconque des revendications 1 à 7, comprenant

- la dispersion homogène du colloïde minéral conducteur, dans une quantité comprise dans la gamme de 0,5 à 7 % en poids, rapporté au poids sec total de la dispersion, dans un mélange liquide de monomères comprenant l'au moins un thiol polyfonctionnel et l'au moins un monomère allylique polyfonctionnel,
- le dépôt de la dispersion résultante sur un substrat optique transparent, et
- le durcissement de la couche résultante par soumission du substrat revêtu à un rayonnement UV et/ou de la chaleur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 200906453 B
- WO 2009029641 A
- WO 2010075508 A
- WO 2006055409 A